Europäisches Patentamt

European Patent Office

Office européen des brevets

(19)

(11) Veröffentlichungsnummer: **0 050 722**
**B1**

# (12) EUROPÄISCHE PATENTSCHRIFT

(45) Veröffentlichungstag der Patentschrift:
09.04.86

(21) Anmeldenummer: 81106818.8

(22) Anmeldetag: 01.09.81

(51) Int. Cl.⁴: **B 60 R 19/26**

(54) Stossfänger für Fahrzeuge, insbesondere für Kraftfahrzeuge.

(30) Priorität: 28.10.80 DE 3040502

(43) Veröffentlichungstag der Anmeldung:
05.05.82 Patentblatt 82/18

(45) Bekanntmachung des Hinweises auf die Patenterteilung:
09.04.86 Patentblatt 86/15

(84) Benannte Vertragsstaaten:
DE FR GB IT

(56) Entgegenhaltungen:
DE - B - 2 124 427
US - A - 4 079 924

(73) Patentinhaber: Dr.Ing.h.c. F. Porsche
Aktiengesellschaft, Porschestrasse 42,
D-7000 Stuttgart 40 (DE)

(72) Erfinder: Peter, Dietmar, Graf-Staufenberg-Strasse 11,
D-7251 Hemmingen (DE)

EP 0 050 722 B1

## Beschreibung

Die Erfindung betrifft einen Stoßfänger für Fahrzeuge, insbesondere Kraftfahrzeuge, mit einem Träger und Dämpfern, die unter Vermittlung von Haltevorrichtungen am Träger gehalten sind, wobei jede Haltevorrichtung einerseits an einem vertikalen Wandabschnitt des Trägers gehalten ist und andererseits über einen Bolzen mit dem jeweiligen Dämpfer in Verbindung steht, und der Träger etwa in horizontaler Richtung verlaufende Stege aufweist.

Eine derartige Stoßfängeranordnung ist durch die DE-B 21 24 227 bekannt. Nachteilig hierbei ist, daß der Bolzen zur Verbindung des Dämpfers mit der Haltevorrichtung an beiden Enden durch zusätzliche Befestigungsmittel wie Scheiben, Splinte oder dergleichen gegen axiales Verschieben gesichert werden muß. Auch erfordert die Montage der Befestigungsmittel einen relativ hohen Zeitaufwand.

Ein weiterer Nachteil besteht darin, daß die Haltevorrichtung zwischen Dämpfer und Träger nur mit einem vertikalen Wandabschnitt an einem gleichlaufenden Wandabschnitt des Trägers anliegt, wodurch bei aussermittiger Belastung des Stoßfängers solche Momente auftreten können, daß eine funktionsgerechte Krafteinleitung in die Haltevorrichtung, den Dämpfer und den Aufbau beeinträchtigt wird.

Bei einem anderen bekannten gattungsgemäßen Stoßfänger (US-A 4 079 924) wird der Bolzen durch eine die Haltevorrichtung und den Dämpfer umgebende Dichtmanschette gegen axiales Verschieben gesichert, wobei zur Befestigung der Dichtmanschette an der Haltevorrichtung eine Schlauchklemme vorgesehen ist.

Dieser Ausführung haftet der Nachteil an, daß die Dichtmanschette und die Schlauchklemme hohe Kosten verursachen und zu ihrer Montage ein beträchtlicher Zeitaufwand erforderlich ist.

Aufgabe der Erfindung ist es, einen Stoßfänger mit Träger, Haltevorrichtung und Dämpfer zu schaffen, deren Ausgestaltung sicherstellt, daß die Montage des Dämpfers und der Haltevorrichtung einfach ist und die am Stoßfänger auftretenden Belastungen gut über den Träger und die Haltevorrichtung in den Dämpfer eingeleitet werden.

Diese Aufgabe wird durch die Merkmale des kennzeichnenden Teils des Anspruchs 1 gelöst. Weitere bevorzugte Merkmale der Erfindung sind in den Unteransprüchen enthalten.

Die mit der Erfindung erzielten Vorteile sind hauptsächlich darin zu sehen, daß durch das Zusammenwirken der Führungsabschnitte der Haltevorrichtung und der Stege des Trägers die am Stoßfänger auftretenden Belastungen gut über den Träger und die Haltevorrichtung in den Dämpfer eingeleitet werden. Ferner entfallen durch die Ausgestaltung der Haltevorrichtung und des Trägers zusätzliche Befestigungsmittel wie Scheiben, Splinte und dergleichen für den Bolzen, da dieser in der einen axialen Richtung lediglich durch einen der Stege des Trägers und in der anderen axialen Richtung entweder durch eine Begrenzungswand der Haltevorrichtung oder durch den anderen der beiden Stege in Lage gehalten wird.

Der Gegenstand der Erfindung wird nachfolgend anhand von in der Zeichnung dargestellten Ausführungsbeispielen näher erläutert.

Es zeigt

Fig. 1 eine Draufsicht einer schematischen Stoßfängeranordnung ohne Verkleidung,

Fig. 2 einen Schnitt nach der Linie II-II der Fig. 1 in größerem Maßstab,

Fig. 3 einen Schnitt entsprechend Fig. 2 einen weiteren Ausführungsbeispieles,

Fig. 4 einen Schnitt entsprechend Fig. 2 eines weiteren Ausführungsbeispieles.

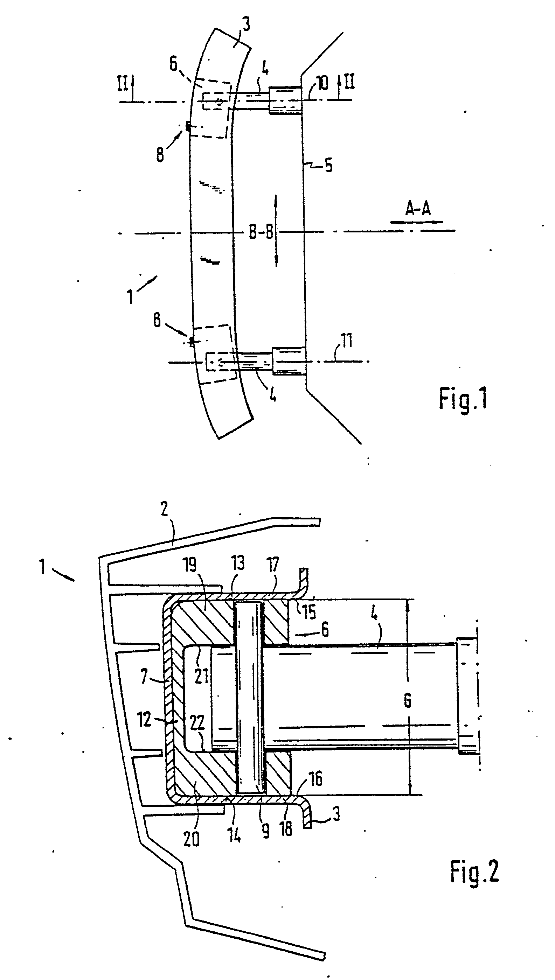

Fig. 1 und 2 zeigen einen Stoßfänger 1, der eine aus elastischem Schaumstoff bestehende Verkleidung 2 und einen formund biegesteifen Träger 3 umfaßt. Der Träger 3 erstreckt sich quer zur Fahrzeuglängsrichtung A-A und stützt sich an zwei außerhalb der Mittellängsebene des Fahrzeuges angebrachten Dämpfern 4 ab, die am Aufbau 5 gehalten sind.

Zwischen jedem Dämpfer 4 und dem Träger 3 ist eine Haltevorrichtung 6 vorgesehen, die einerseits an einem vertikalen Wandabschnitt 7 des Trägers 3 über lösbare Befestigungsmittel 8 gehalten ist und andererseits über einen Bolzen 9 mit dem jeweiligen Dämpfer 4 in Verbindung steht. Die Befestigung der Haltevorrichtung 6 mit dem Träger 3 erfolgt - in Fahrzeugquerrichtung B-B gesehen - jeweils innerhalb der beiden Dämpfermittelachsen 10, 11. Die Haltevorrichtung 6 weist neben einem vertikalen Wandabschnitt 12 etwa horizontal verlaufende Führungsabschnitte 13, 14 auf, die mit den Innenseiten 15, 16 von Stegen 17, 18 des Trägers 3 abstützend zusammenarbeiten, wobei die Haltevorrichtung 6 leicht einführbar in den Träger 3 ausgebildet ist. Es besteht auch die Möglichkeit, die Stege 17, 18 ebenso wie die korrespondierenden Führungsabschnitte 13, 14 V-förmig auszubilden. Die Führungsabschnitte 13, 14 der Haltevorrichtung 6 sind gemäß Fig. 2 an Stegen 19, 20 vorgesehen, deren Innenseiten 21, 22 zur Aufnahme des Dämpfers 4 ausgebildet sind.

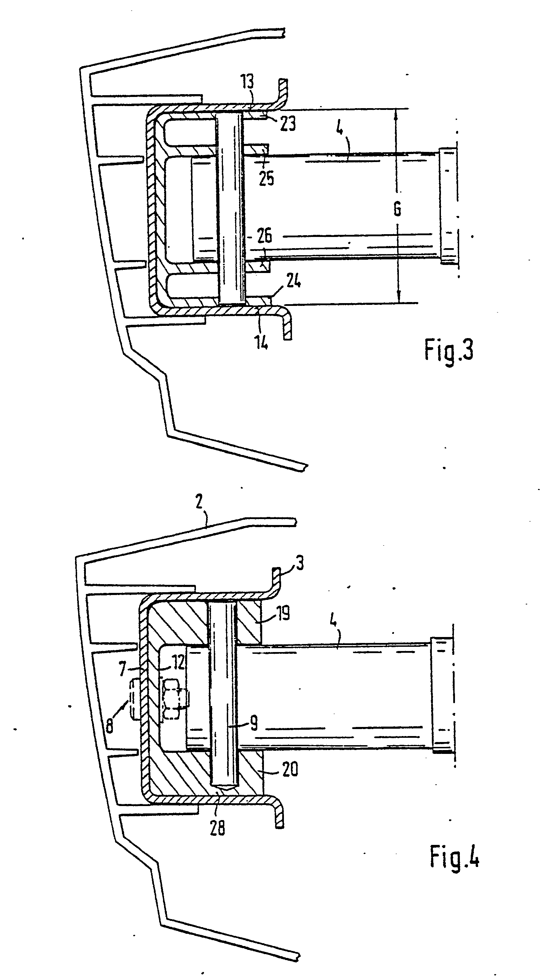

Gemäß Fig. 3 sind die Führungsabschnitte 13, 14 und die Aufnahmen des Dämpfers 4 an separaten Stegen 23, 24, 25, 26 vorgesehen, wodurch eine Gewichtserleichterung der Haltevorrichtung 6 erzielt wird.

Eine Bohrung zur Aufnahme des Bolzens 9 erstreckt sich gemäß Fig. 2 und 3 sowohl im Dämpfer 4 als auch über die gesamte Höhe G der jeweiligen Stege 19, 20 bzw. 23, 24, 25, 26 der Haltevorrichtung 6. Der Bolzen 9 wird in der einen axialen Richtung lediglich durch einen der Stege 17, 18 des Trägers (Fig. 2, 3 und 4) und in der anderen axialen Richtung entweder durch eine Begrenzungswand 28 der Haltevorrichtung (Fig. 4) oder durch den anderen der beiden Stege 17, 18 in Lage gehalten (Fig. 2 und 3).

Durch die Begrenzungswand 28 wird ein Herausfallen des Bolzens 9 bei der Montage verhindert.

Die Montage des Stoßfängers erfolgt in der Weise, daß zuerst die Haltevorrichtungen 6 auf die am Aufbau 5 gehaltenen Dämpfer 4 aufgesetzt und durch die Bolzen 9 fixiert werden. Danach wird der Träger 3 von vorne auf die Haltevorrichtungen 6 aufgeschoben und über Befestigungsmittel 8 mit dieser an vertikalen Wandabschnitten 7, 12 verbunden. Zuletzt wird dann die Verkleidung 2 am Träger 3 durch geeignete Befestigungsarten wie Klipsen, Schrauben oder dergleichen befestigt.

**Patentansprüche**

1. Stoßfänger für Fahrzeuge, insbesondere für Kraftfahrzeuge, mit einem Träger (3) und Dämpfern (4), die unter Vermittlung von Haltevorrichtungen (6) am Träger (3) gehalten sind, wobei jede Haltevorrichtung (6) einerseits an vertikalen Wandabschnitten (12) des Trägers (3) gehalten ist und andererseits über einen Bolzen (9) mit dem jeweiligen Dämpfer (4) in Verbindung steht, und der Träger (3) etwa in horizontaler Richtung verlaufende Stege (17, 18) aufweist, dadurch gekennzeichnet, daß die Haltevorrichtung (6) zu den Stegen (17, 18) gleichgerichtete Führungsabschnitte (13, 19) aufweist, die mit den Innenseiten (15, 16) der Stege (17, 18) des Trägers (3) abstützend zusammenarbeiten und daß der Bolzen (9) zumindest in der einen axialen Richtung lediglich durch einen der Stege (17, 18) des Trägers (3) in Lage gehalten wird.

2. Stoßfänger nach Anspruch 1, dadurch gekennzeichnet, daß der Bolzen (9) in der anderen axialen Richtung entweder durch eine Begrenzungswand (28) der Haltevorrichtung (6) oder durch den anderen der beiden Stege (17, 18) in Lage gehalten ist.

3. Stoßfänger nach Anspruch 1, dadurch gekennzeichnet, daß die Führungsabschnitte (13, 14) an Stegen (19, 20) vorgesehen sind, deren Innenseiten (21, 22) zur Aufnahme des Dämpfers (4) ausgebildet sind.

4. Stoßfänger nach Anspruch 1, dadurch gekennzeichnet, daß die Führungsabschnitte (13, 14) und die Aufnahmen des Dämpfers (4) an separaten Stegen (23, 24, 25, 26) vorgesehen sind.

5. Stoßfänger nach Anspruch 2, dadurch gekennzeichnet, daß die Begrenzungswand (28) durch eine Bohrung in den Stegen (20 bzw. 24) gebildet wird.

**Revendications**

1. Pare-chocs pour véhicules, notamment pour véhicules automobiles, comportant une poutre (3) et des amortisseurs (4) qui sont fixés au moyen de dispositifs de retenue (6) à la poutre (3), chaque dispositif de retenue (6) étant retenu d'une part à des sections de paroi verticales (12) de la poutre (3) et étant en liaison, de l'autre, par l'intermédiaire d'une cheville (9), avec l'amortisseur (4) respectif, et la poutre (3) comportant des membrures (17, 18) dirigées sensiblement horizontalement, caractérisé en ce que le dispositif de retenue (6) comporte des sections de guidage (13, 19) de même direction que les membrures (17, 18), qui coopèrent avec les faces intérieures (15, 16) des membrures (17, 18) de la poutre (3) en s'appuyant sur elles, et en ce que la cheville (9) est maintenue en position au moins dans l'un des sens axiaux simplement par l'une des membrures (17, 18) de la poutre (3).

2. Pare-chocs selon la revendication 1, caractérisé en ce que la cheville (9) est maintenue en position dans l'autre sens axial par une paroi de délimitation (28) du dispositif de retenue (6) ou par la seconde des deux membrures (17, 18).

3. Pare-chocs selon la revendication 1, caractérisé en ce que les sections de guidage (13, 14) sont prévues sur des membrures (19, 20) dont les faces intérieures (21, 22) sont conformées pour recevoir l'amortisseur (4).

4. Pare-chocs selon la revendication 1, caractérisé en ce que les sections de guidage (13, 14) et les logements de l'amortisseur (4) se trouvent sur des membrures (23, 24, 25, 26) séparées.

5. Pare-chocs selon la revendication 2, caractérisé en ce que la paroi de délimitation (28) est constituée par un alésage formé dans les membrures (20, respectivement 24).

**Claims:**

1. A bumper for vehicles, in particular motor vehicles, with a support (3) and shock-absorbers (4) held on the support (3) by means of retaining devices (6), each retaining device (6) being held on the one hand on vertical wall sections (12) of the support (3) and on the other hand being connected to the respective shock-absorber (4) by means of a bolt (9), and the support (3) having webs (17, 10) extending in a substantially horizontal direction, characterised in that the retaining device (6) has guide sections (13, 14) which extend in substantially the same direction as the webs (17, 18) and which co-operate in a supporting manner with the insides (15, 16) of the webs (17, 18) of the support (3), and that the bolt (9) is held in position, at least in one axial direction, only by means of one of the webs (17, 18) of the support (3).

2. A bumper according to claim 1, characterised in that the bolt (9) in the other axial direction is held in position by means of either a limiting wall (28) of the retaining device (6) or by means of the other of the two webs (17, 18).

3. A bumper according to claim 1, characterised in that the guide sections (13, 14) are provided on webs (19, 20), the inner sides (21, 22) of which are adapted to receive the shock-absorber (4).

4. A bumper according to claim 1, characterised in that the guide sections (13, 14) and receiving means of the shock-absorber (4) are provided on separate webs (23, 24, 25, 26).

5. A Bumper according to claim 2, characterised in that the limiting wall (28) is formed by means of a bore in the webs (20 or 24).

Fig.1

Fig.2

Fig.3

Fig.4